# EUROPEAN PATENT APPLICATION

(11) **EP 4 645 486 A1**
(43) Date of publication of application: **05.11.2025**
(21) Application number: 24895155.0
(22) Date of filing: 06.08.2024
(51) Int. Cl.: H01M 10/04

(54) **ADHESIVE TAPE ADHERING DEVICE, ADHESIVE TAPE ADHERING METHOD, AND BATTERY PRODUCTION LINE**

(30) Priority: 07.03.2024 CN 202410257922
(71) Applicant: Contemporary Amperex Technology Co., Limited, Ningde, Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN)
(74) Representative: Herrmann, Uwe
(86) International application number: PCT/CN2024/110068
(87) International publication number: WO 2025/185065

(57) **Abstract**

The present disclosure discloses an adhesive tape applying device, an adhesive tape applying method and a battery production line. The adhesive tape applying device is used for applying an adhesive tape to a workpiece. The adhesive tape applying device includes: an adhesive tape applying mechanism, including an adhesive tape sucking head for sucking the adhesive tape; and a shaping mechanism, including a shaping assembly, the shaping assembly including a first shaping piece and a second shaping piece which are arranged at an interval, and an interval space between the first shaping piece and the second shaping piece forming a shaping channel. The adhesive tape sucking head is configured as follows: the adhesive tape sucking head can pass through the shaping channel and enable one end portion of two end portions of the adhesive tape to be in contact with the first shaping piece and pass through a gap between the adhesive tape sucking head located in the shaping channel and the first shaping piece and the other end portion of the two end portions of the adhesive tape to be in contact with the second shaping piece and pass through a gap between the adhesive tape sucking head located in the shaping channel and the second shaping piece, so that the two end portions of the adhesive tape are bent, and the adhesive tape passing through the shaping channel is applied to the workpiece.

## Description

### CROSS-REFERENCE TO RELATED APPLICATIONS

The present disclosure is proposed based on Chinese Patent Application No. 202410257922.4 filed on March 7, 2024, and entitled "ADHESIVE TAPE APPLYING DEVICE, ADHESIVE TAPE APPLYING METHOD AND BATTERY PRODUCTION LINE", and claims the priority of the Chinese patent application, the entire content of which is incorporated herein by reference.

### TECHNICAL FIELD

The present disclosure relates to the technical field of battery manufacturing, and in particular, to an adhesive tape applying device, an adhesive tape applying method and a battery production line.

### BACKGROUND

New energy batteries are increasingly applied in life and industry. For example, new energy vehicles equipped with batteries have been widely used. In addition, batteries are increasingly applied in the fields of energy storage and the like.

In a battery manufacturing process, especially in an adhesive tape applying process, there are problems of low adhesive tape applying efficiency and unreliable sticking.

### SUMMARY OF THE INVENTION

In order to solve the above technical problems, the present disclosure provides an adhesive tape applying device with high adhesive tape applying efficiency and more reliable sticking, an adhesive tape applying method and a battery production line.

The present disclosure is implemented through the following technical solutions.

A first aspect of the present disclosure provides an adhesive tape applying device for applying an adhesive tape to a workpiece. The adhesive tape applying device includes: an adhesive tape applying mechanism, including an adhesive tape sucking head for sucking the adhesive tape; and a shaping mechanism, including a shaping assembly, the shaping assembly including a first shaping piece and a second shaping piece which are arranged at an interval, and an interval space between the first shaping piece and the second shaping piece forming a shaping channel, where the adhesive tape sucking head is configured as follows: the adhesive tape sucking head can pass through the shaping channel and enable one end portion of two end portions of the adhesive tape to be in contact with the first shaping piece and pass through a gap between the adhesive tape sucking head located in the shaping channel and the first shaping piece and the other end portion of the two end portions of the adhesive tape to be in contact with the second shaping piece and pass through a gap between the adhesive tape sucking head located in the shaping channel and the second shaping piece, so that the two end portions of the adhesive tape are bent, and the adhesive tape passing through the shaping channel is applied to the workpiece.

Through the mutual cooperation between the adhesive tape sucking head and the shaping assembly, the two end portions of the adhesive tape are respectively in contact with the first shaping piece and the second shaping piece and are bent. Moreover, the adhesive tape can pass through the shaping channel between the first shaping piece and the second shaping piece under the drive of the adhesive tape sucking head. Thus, the two end portions of the adhesive tape can be shaped to extend substantially along a moving direction of the adhesive tape sucking head, that is, the first shaping piece and the second shaping piece cooperate with the adhesive tape sucking head to play a shaping role. In this way, even if the position where the adhesive tape is to be applied is concave, the bent adhesive tape can be attached to the workpiece more adaptively, so that the workpiece can be stuck more firmly, the adhesive tape applying efficiency can be improved, and the labor cost can be reduced.

In some embodiments, the adhesive tape sucking head includes a first side wall and a second side wall located on two opposite sides of a first direction; and the adhesive tape sucking head is configured as follows: the adhesive tape sucking head passes through the shaping channel along a second direction, the two end portions of the adhesive tape are bent by the misalignment action between the first side wall and the first shaping piece along the second direction and the misalignment action between the second side wall and the second shaping piece along the second direction, and the second direction is perpendicular to the first direction.

By cooperation of the two side walls (the first side wall and the second side wall) of the adhesive tape sucking head with the first shaping piece and the second shaping piece respectively, the two end portions of the adhesive tape can be bent against the two side walls respectively to improve bending and shaping effects, so that the adhesive tape can be attached to the workpiece more adaptively, the workpiece can be stuck more firmly, and thus the workpiece is fully protected.

In some embodiments, the adhesive tape sucking head includes a bottom wall, the bottom wall is connected to the first side wall and the second side wall, the bottom wall is provided with a bottom wall suction hole, the first side wall is provided with a first side wall suction hole, the second side wall is provided with a second side wall suction hole, the first side wall suction hole and the second side wall suction hole are respectively used for sucking the two end portions of the adhesive tape, and the bottom wall suction hole is used for sucking the part between the two end portions of the adhesive tape.

The adhesive tape sucking head sucks the part between the two end portions of the adhesive tape through the bottom wall suction hole, and sucks the two end portions of the adhesive tape through the first side wall suction hole and the second side wall suction hole, so that the two end portions of the adhesive tape can be kept in a bent state. In this way, in the process of the adhesive tape sucking head passing the sucked adhesive tape through the shaping channel and applying the sucked adhesive tape to a tab, the risk of tearing possibly caused by the adhesive tape pulling an electrode assembly due to the two end portions of the adhesive tape applying to a large surface of the electrode assembly can be avoided, thereby improving the sticking reliability.

In some embodiments, the first side wall suction hole, the second side wall suction hole and the bottom wall suction hole are respectively connected to a negative pressure device through a gas channel.

The negative pressure device can provide negative pressure to adsorb the adhesive tape, and the negative pressure device can release the negative pressure to release the adhesive tape, thereby being convenient to control the adhesive tape sucking head to suck and release the adhesive tape.

In some embodiments, the first shaping piece includes a first rotating roller that can rotate freely around an axis, the second shaping piece includes a second rotating roller that can rotate freely around an axis, and the first rotating roller and the second rotating roller are parallel to each other and are located at the same position in the second direction.

By means of the first rotating roller and the second rotating roller rotating freely around the axis, the friction of contact between the two end portions of the adhesive tape and the first rotating roller and the second rotating roller respectively can be reduced in the process of the adhesive tape sucking head passing through the shaping channel, so that the adhesive tape sucking head can pass through the shaping channel more smoothly and complete bending and adhesive tape applying operations.

In some embodiments, the first shaping piece includes a first shaping plate, and the second shaping piece includes a second shaping plate.

In the process of the adhesive tape sucking head passing through the shaping channel, the first shaping plate and the second shaping plate are in contact with the two end portions of the adhesive tape respectively to bend the adhesive tape in a scraping manner, thereby improving the bending effect.

In some embodiments, at least one of the first shaping piece and the second shaping piece is configured to be able to float along the first direction.

Therefore, in the process of the adhesive tape sucking head passing through the shaping channel, one end portion of the two end portions of the adhesive tape is squeezed between the first side wall and the first shaping piece, and the other end portion is squeezed between the second side wall and the second shaping piece. In this way, the two end portions are always bent against the first side wall and the second side wall respectively to improve the shaping effect, so that the adhesive tape can be applied to a tab more adaptively, the tab can be stuck more firmly, and thus the tab is fully protected.

In some embodiments, the shaping assembly includes a shaping bracket, a first shaping mounting frame and a second shaping mounting frame, the first shaping piece is arranged on the first shaping mounting frame, the second shaping piece is arranged on the second shaping mounting frame, a first elastic member is connected between the shaping bracket and the first shaping mounting frame, and the first elastic member can extend and retract along the first direction so that the first shaping piece floats along the first direction; and/or a second elastic member is connected between the shaping bracket and the second shaping mounting frame, and the second elastic member can extend and retract along the first direction so that the second shaping piece floats along the first direction.

In the process of the adhesive tape sucking head passing through the shaping channel, by means of extension and retraction of at least one of the first elastic member and the second elastic member along the first direction, one end portion of the two end portions of the adhesive tape is squeezed between the first side wall and the first shaping piece, and the other end portion is squeezed between the second side wall and the second shaping piece. In this way, the two end portions of the adhesive tape are bent against the first side wall and the second side wall respectively to improve the shaping effect, so that the adhesive tape can be applied to a tab more adaptively, and thus the tab can be stuck more firmly.

In some embodiments, a first guide member is arranged on the shaping bracket, the first guide member extends along the first direction, and the first shaping mounting frame is slidably arranged on the first guide member; and/or a second guide member is arranged on the shaping bracket, the second guide member extends along the first direction, and the second shaping mounting frame is slidably arranged on the second guide member.

The first guide member and the second guide member are respectively in sliding fit with the first shaping mounting frame and the second shaping mounting frame, so as to improve the stability of the first shaping piece and the second shaping piece floating along the first direction, and improve the bending reliability of the adhesive tape.

In some embodiments, the shaping mechanism further includes a shaping frame and a shaping driving member arranged on the shaping frame, the driving end of the shaping driving member is connected to the shaping bracket, and the shaping driving member can drive the shaping assembly to move close to or away from the workpiece along the second direction.

By driving the shaping assembly to move close to or away from the workpiece along the second direction through the shaping driving member, the distance between the shaping assembly and the workpiece can be adjusted to adapt to different workpiece sizes.

In some embodiments, at least two groups of adhesive tape sucking heads are provided, two adjacent groups of adhesive tape sucking heads are arranged at intervals along a third direction, and the third direction is perpendicular to the first direction and perpendicular to the second direction.

A plurality of groups of adhesive tape sucking heads can suck a plurality of adhesive tapes at the same time. In the process of the adhesive tape sucking head passing through the shaping channel, a plurality of adhesive tapes can be bent at the same time, and then, the bent adhesive tapes can be applied to a plurality of workpieces or a plurality of different parts of the same workpiece at the same time, thereby improving the applying efficiency.

In some embodiments, two adjacent groups of adhesive tape sucking heads are configured to be able to move close to or away from each other along the third direction.

Therefore, the distance between two groups of adhesive tape sucking heads in the third direction can be adjusted so as to adapt to more types of workpieces, thereby improving the universality.

In some embodiments, the adhesive tape applying mechanism further includes: an adhesive tape sucking head driving member for driving at least one group of adhesive tape sucking heads to move along the third direction.

The adhesive tape sucking head is driven to move along the third direction by the adhesive tape sucking head driving member, so that the distance between two groups of adhesive tape sucking heads can be automatically adjusted to efficiently adapt to more types of workpieces.

In some embodiments, each group of adhesive tape sucking heads includes two adhesive tape sucking blocks, and the two adhesive tape sucking blocks are arranged at an interval along the first direction and are configured to be able to move close to or away from each other along the first direction.

Therefore, the distance between two adhesive tape sucking blocks of each group of adhesive tape sucking heads in the first direction can be adjusted so as to adapt to more types of workpieces, thereby improving the universality.

In some embodiments, the adhesive tape applying device further includes: an adhesive tape supply mechanism, including at least two adhesive tape supply units, each of the adhesive tape supply units being configured to be able to switch between an adhesive tape replacing station and an adhesive tape supply station, the adhesive tape sucking head sucking the adhesive tape cut from an adhesive tape roll carried by the adhesive tape supply unit at the adhesive tape supply station, and the adhesive tape replacing station being used for replacing the adhesive tape roll.

Each adhesive tape supply unit is configured to be able to switch between the adhesive tape replacing station and the adhesive tape supply station, which can realize the replacement of the adhesive tape roll without stopping the machine to continuously provide an adhesive tape to an adhesive tape head, thereby improving the production efficiency.

In some embodiments, when any one of at least two adhesive tape supply units is located at the adhesive tape supply station, the remaining adhesive tape supply units are located at respective adhesive tape replacing stations.

Therefore, each adhesive tape supply unit can independently switch between the adhesive tape supply station and the adhesive tape replacing station, thereby being convenient for each adhesive tape supply unit to replace the adhesive tape roll.

In some embodiments, the adhesive tape supply mechanism further includes a sliding rail and at least two adhesive tape supply driving members, each of the adhesive tape supply units can be slidably arranged on the sliding rail, and each of the adhesive tape supply driving members is configured to respectively drive the adhesive tape supply unit to slide between the adhesive tape replacing station and the adhesive tape supply station.

Each adhesive tape supply unit is respectively driven by an independent adhesive tape supply driving member, thereby facilitating the separate control of each adhesive tape supply unit, and improving the reliability of each adhesive tape supply unit when switching.

In some embodiments, each of the adhesive tape supply units includes an adhesive tape supply bracket, an adhesive tape roll mounting shaft and an adhesive tape delivery mechanism, the adhesive tape roll mounting shaft is respectively arranged on both sides of the adhesive tape supply bracket in the third direction, and the adhesive tape delivery mechanism is respectively arranged on both sides of the adhesive tape supply bracket in the third direction.

Therefore, each adhesive tape supply unit can deliver two adhesive tapes at the same time, so that the adhesive tape sucking head can suck the two adhesive tapes at a time, thereby improving the adhesive tape delivery efficiency, and further improving the adhesive tape applying efficiency.

In some embodiments, the adhesive tape delivery mechanism includes an adhesive tape pulling mechanism, an adhesive tape pressing mechanism and an adhesive tape cutting mechanism, and the adhesive tape pressing mechanism, the adhesive tape cutting mechanism and the adhesive tape pulling mechanism are arranged in sequence along a delivery direction of the adhesive tape; and the adhesive tape pulling mechanism is used for pulling the adhesive tape to unwind, the adhesive tape pressing mechanism is used for pressing the adhesive tape in the second direction, and the adhesive tape cutting mechanism is used for cutting the adhesive tape.

Therefore, an adhesive tape can be automatically supplied to an adhesive tape head, thereby improving the adhesive tape delivery efficiency, and further improving the adhesive tape applying efficiency.

In some embodiments, the adhesive tape applying mechanism further includes a movable frame, and the movable frame is connected to the adhesive tape sucking head and is used for driving the adhesive tape sucking head to move along the first direction and the second direction respectively.

Therefore, the adhesive tape sucking head can automatically complete adhesive tape sucking and adhesive tape applying operations, thereby improving the adhesive tape applying efficiency.

A second aspect of the present disclosure provides an adhesive tape applying method for applying an adhesive tape to a workpiece. The adhesive tape applying method includes: an adhesive tape sucking step: sucking, by an adhesive tape sucking head, the adhesive tape; an adhesive tape shaping step: enabling the adhesive tape sucking head to pass through a shaping channel formed by an interval space between a first shaping piece and a second shaping piece, and enabling two end portions of the sucked adhesive tape to be respectively in contact with the first shaping piece and the second shaping piece, so that the two end portions of the adhesive tape are bent; and an adhesive tape applying step: applying, by the adhesive tape sucking head, the adhesive tape passing through the shaping channel to the workpiece, where in the adhesive tape shaping step, one end portion of the two end portions of the adhesive tape is in contact with the first shaping piece and passes through a gap between the adhesive tape sucking head located in the shaping channel and the first shaping piece, and the other end portion of the two end portions of the adhesive tape is in contact with the second shaping piece and passes through a gap between the adhesive tape sucking head located in the shaping channel and the second shaping piece.

Through the mutual cooperation between the adhesive tape sucking head and the shaping assembly, the two end portions of the adhesive tape are respectively in contact with the two shaping pieces to bend and shape the two end portions of the adhesive tape, and the bent and shaped adhesive tape can be attached to a concave structure of the workpiece more adaptively, so that the workpiece can be stuck more firmly, the production efficiency can be improved, and the labor cost can be reduced. During the battery manufacturing process, the position where two tabs are connected to each other and the root of each tab are effectively protected, and the adhesive tape applying operation of the tab is automatically completed through the adhesive tape applying device to improve the adhesive tape applying efficiency, thereby improving the battery production efficiency, and reducing the labor cost.

In some embodiments, after the adhesive tape shaping step and before the adhesive tape applying step, the adhesive tape applying method further includes: an adhesive tape bending keeping step: respectively sucking the two end portions of the bent adhesive tape through a first side wall suction hole of a first side wall and a second side wall suction hole of a second side wall of the adhesive tape sucking head.

The adhesive tape sucking head sucks the part between the two end portions of the adhesive tape through a bottom wall suction hole, and sucks the two end portions of the adhesive tape through the first side wall suction hole and the second side wall suction hole, so that the two end portions of the adhesive tape can be kept in a bent state. In this way, in the process of the adhesive tape sucking head passing the sucked adhesive tape through the shaping channel and applying the sucked adhesive tape to a tab, the risk of tearing possibly caused by the adhesive tape pulling an electrode assembly due to the two end portions of the adhesive tape sticking to a large surface of the electrode assembly can be avoided, thereby improving the sticking reliability.

In some embodiments, the adhesive tape applying method further includes: an adhesive tape supply step, and the adhesive tape supply step includes: switching an adhesive tape supply unit with an adhesive tape roll to be replaced at an adhesive tape supply station from the adhesive tape supply station to an adhesive tape replacing station; switching the adhesive tape supply unit with the replaced adhesive tape roll at the adhesive tape replacing station from the adhesive tape replacing station to the adhesive tape supply station; and supplying, by the adhesive tape supply unit at the adhesive tape supply station, the adhesive tape to the adhesive tape sucking head.

The adhesive tape supply unit is configured to be able to switch between the adhesive tape replacing station and the adhesive tape supply station, which can realize the replacement of the adhesive tape roll without stopping the machine to continuously provide an adhesive tape to an adhesive tape head, thereby improving the production efficiency.

In some embodiments, the supplying, by the adhesive tape supply unit at the adhesive tape supply station, the adhesive tape to the adhesive tape sucking head includes: pulling, by an adhesive tape pulling mechanism of the adhesive tape supply unit at the adhesive tape supply station, the adhesive tape to unwind; pressing, by an adhesive tape pressing mechanism of the adhesive tape supply unit at the adhesive tape supply station, the adhesive tape; and cutting, by an adhesive tape cutting mechanism of the adhesive tape supply unit at the adhesive tape supply station, the adhesive tape.

Therefore, an adhesive tape can be automatically supplied to an adhesive tape head, thereby improving the adhesive tape delivery efficiency, and further improving the adhesive tape applying efficiency.

A third aspect of the present disclosure provides a battery production line, including: a supply device for supplying a workpiece; and the adhesive tape applying device as described in any of the above embodiments.

In some embodiments, the workpiece includes at least two electrode assemblies, tabs of two adjacent electrode assemblies are connected to each other, and the tabs are located in a concave space between the two adjacent electrode assemblies; and the adhesive tape sucking head is configured as follows: the adhesive tape passing through the shaping channel is applied to the tab and covers the tab.

### Effects of the Invention:

Through the present disclosure, the bending and shaping of the adhesive tape can be achieved, and the bent and shaped adhesive tape can be attached to the workpiece more adaptively, so that the workpiece can be stuck more firmly, and the adhesive tape applying efficiency can be improved.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:
FIG. 1 is a schematic structural view of an adhesive tape applying device provided by some embodiments of the present disclosure;
FIG. 2 is a schematic structural view of an adhesive tape sucking head provided by some embodiments of the present disclosure;
FIG. 3 is a front view of an adhesive tape sucking head provided by some embodiments of the present disclosure;
FIG. 4 is a side view of an adhesive tape sucking head provided by some embodiments of the present disclosure;
FIG. 5 is a schematic structural view of a shaping mechanism provided by some embodiments of the present disclosure;
FIG. 6 is a top view of a shaping mechanism provided by some embodiments of the present disclosure;
FIG. 7 is a schematic structural view of an adhesive tape supply unit provided by some embodiments of the present disclosure;
FIG. 8(a) is a top view of an electrode assembly to be stuck with an adhesive tape;
FIG. 8(b) is a front view of an electrode assembly to be stuck with an adhesive tape;
FIG. 9 is a flowchart of an adhesive tape applying method provided by some embodiments of the present disclosure;
FIG. 10 is a flowchart of an adhesive tape applying method provided by some other embodiments of the present disclosure;
FIG. 11 is a flowchart of an adhesive tape applying method provided by still other embodiments of the present disclosure; and
FIG. 12 is a flowchart of an adhesive tape applying method provided by yet other embodiments of the present disclosure.

### Description of reference numerals

100-adhesive tape applying device;
1-adhesive tape applying mechanism; 10-adhesive tape sucking head; 101-first side wall; 101a-first side wall suction hole; 102-second side wall; 103-bottom wall; 103a-bottom wall suction hole; 11-adhesive tape sucking block; 11a-adjusting hole; 12-adhesive tape sucking head driving member; 121-first support frame; 122-second support frame; 13-adhesive tape sucking head bracket; 14-guide rail; 15-fixed block; 15a-positioning hole;
2-shaping mechanism; 20-shaping assembly; 20a-shaping channel; 21-first shaping piece; 22-second shaping piece; 23-shaping bracket; 24-first shaping mounting frame; 25-second shaping mounting frame; 261-first guide member; 262-second guide member; 27-shaping frame; 28-shaping driving member; 291-first elastic member; 292-second elastic member;
3-adhesive tape supply mechanism; 30-adhesive tape supply unit; 30a-first adhesive tape supply unit; 30b-second adhesive tape supply unit; 301-sliding rail; 302-adhesive tape driving member; 31-adhesive tape supply bracket; 32-adhesive tape roll mounting shaft; 33-adhesive tape delivery mechanism; 331-adhesive tape pulling mechanism; 332-adhesive tape pressing mechanism; 333-adhesive tape cutting mechanism;
200-adhesive tape;
300-electrode assembly; 310-tab; 320-large surface;
A-adhesive tape replacing station; Al-first adhesive tape replacing station; A2-second adhesive tape replacing station; B-adhesive tape supply station; x-first direction; z-second direction; y-third direction.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates an "or" relationship between the associated objects.

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientation or position relationships based on the orientation or position relationships shown in the drawings, and are intended only to facilitate and simplify the description of the embodiments of the present disclosure, but are not intended to indicate or imply that a device or element referred to must have a particular orientation or be constructed, operated or used in a particular orientation, and therefore should not be construed as limiting the embodiments of the present disclosure.

In the description of the embodiments of the present disclosure, unless otherwise clearly specified and defined, technical terms "mounting", "connected", "connection", "fixation", and the like should be broadly understood. For example, the connection may be fixed connection, detachable connection or integrated connection, may be mechanical connection or electrical connection, or may be direct connection, indirect connection through an intermediate medium, internal communication between two elements, or interaction relationship between two elements. For those of ordinary skill in the art, the specific meanings of the above terms in the embodiments of the present disclosure can be understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly used in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace. With the continuous expansion of the application field of power batteries, the market demand is also constantly expanding. During the battery manufacturing process, adhesive tapes need to be applied to a plurality of parts of a battery to achieve the purpose of protecting the battery. When an adhesive tape is applied to a local flat structure of the battery, the process can be automatically achieved through an adhesive tape applying device, thereby improving the battery production efficiency, and reducing the labor cost. When an adhesive tape is applied to a local uneven structure (such as a concave structure) of the battery, a manual applying manner is mostly used at present, which has low efficiency and increases the labor cost.

For example, in an electrode assembly pairing process during the battery manufacturing process, first, it is necessary to apply adhesive tapes on interconnected tabs between two flat electrode assemblies, and then rotate one of the electrode assemblies 180° toward the other electrode assembly, so that the two electrode assemblies form an electrode assembly pair with a mirror symmetry structure. During the rotation of the electrode assembly, the interconnected tabs are bent, the connected position is prone to cracking, and there is also a risk of breakage at the root of the tab. Therefore, before the electrode assembly is rotated and assembled, the position where the two tabs are connected and the root positions of the tabs can be covered with adhesive tapes to achieve the purpose of fully protecting the tabs. Since a concave region is formed between opposite end portions of the two electrode assemblies and the interconnected tabs are located in the concave region, the opposite end portions of the two electrode assemblies and the connected tabs together form a roughly U-shaped concave structure. When the adhesive tape is applied, if the root of the tab needs to be completely covered, the adhesive tape needs to be shaped into a shape adapted to the concave structure. Therefore, there is an urgent need for an adhesive tape applying device capable of shaping an adhesive tape so that the shaped adhesive tape can be attached to a similar concave structure more adaptively.

In view of this, the present disclosure provides an adhesive tape applying device for applying an adhesive tape to a workpiece. The adhesive tape applying device includes an adhesive tape applying mechanism and a shaping mechanism. The adhesive tape applying mechanism includes an adhesive tape sucking head for sucking the adhesive tape. The shaping mechanism includes a shaping assembly, the shaping assembly includes a first shaping piece and a second shaping piece which are arranged at an interval, and an interval space between the first shaping piece and the second shaping piece forms a shaping channel. The adhesive tape sucking head is configured as follows: the adhesive tape sucking head can pass through the shaping channel, and two end portions of the adhesive tape are respectively in contact with the first shaping piece and the second shaping piece, so that the two end portions of the adhesive tape are bent, and the adhesive tape passing through the shaping channel is applied to the workpiece.

Through the mutual cooperation between the adhesive tape sucking head and the shaping assembly, the bending and shaping of the two end portions of the adhesive tape can be achieved, and the bent and shaped adhesive tape can be attached to the workpiece more adaptively, so that the workpiece can be stuck more firmly, the efficiency can be improved, and the labor cost can be reduced.

The workpiece may be a pair of electrode assemblies for a battery. Of course, the workpiece may also be other components with concave structures, such as components with roughly U-shaped structures, which are also applicable. That is, the adhesive tape applying device in the embodiments of the present disclosure can be used in a battery production process, for example, for applying adhesive tapes to tabs in the process of pairing the electrode assemblies of the battery. Of course, those skilled in the art should understand that the adhesive tape applying device provided in the embodiment of the present disclosure is not only used for applying adhesive tapes in the battery manufacturing process, but also used for applying adhesive tapes to other workpieces to be stuck with adhesive tapes.

In the embodiments of the present disclosure, a battery may be a battery cell.

The battery cell may be a secondary battery, and the secondary battery refers to a battery cell that can be used continually by activating an active material in the manner of charging after the battery cell is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickelcadmium battery, a lead storage battery, or the like, which is not limited in the embodiments of the present disclosure.

The battery cell generally includes an electrode assembly. The electrode assembly includes a positive electrode plate, a negative electrode plate and a spacer. Tabs include a positive tab and a negative tab. During charging and discharging of the battery cell, active ions (such as lithium ions) are intercalated and deintercalated back and forth between a positive electrode and a negative electrode. The spacer is arranged between the positive electrode plate and the negative electrode plate, and may play a role in preventing a short circuit between the positive electrode plate and the negative electrode plate while allowing active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be in a liquid state, a gel state, or a solid state.

In some embodiments, the battery cell may include a shell. The shell is used for encapsulating components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a polygon prism battery. For example, the polygon prism battery may be a hexagonal prism battery or the like, which is not specifically limited in the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or a plurality of end covers may also be provided.

In some embodiments, the shell is provided with at least one electrode terminal, and the electrode terminal is electrically connected to a tab. The electrode terminal may be directly connected to the tab, or may be indirectly connected to the tab through a connecting component. The electrode terminal may be arranged on the end cover, or may also be arranged on the case.

In some embodiments, the shell is provided with a pressure relief mechanism. The pressure relief mechanism is used for releasing the internal pressure of the battery cell.

In the embodiments of the present disclosure, the battery may also be a single physical module including one or a plurality of battery cells to provide higher voltage and capacity. When a plurality of battery cells are provided, the plurality of battery cells are connected in series, in parallel or in series and parallel through bus components.

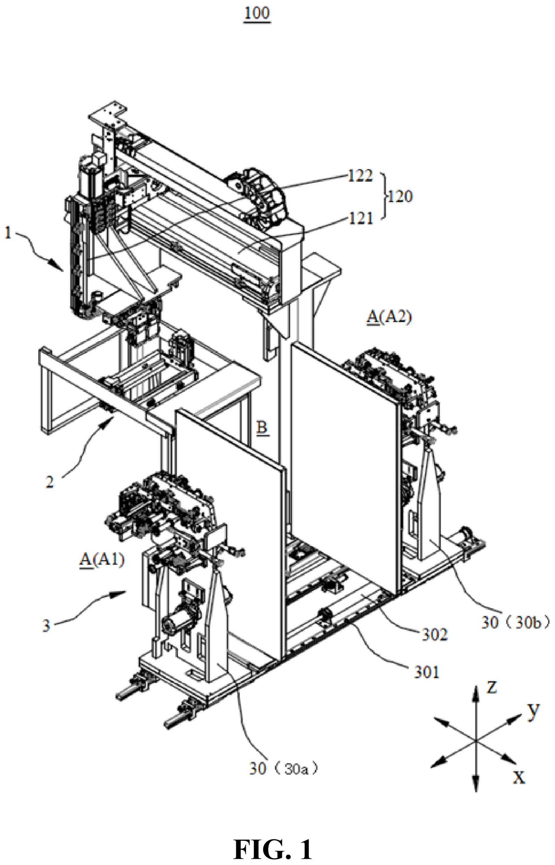

Some embodiments of the present disclosure are described in detail below with reference to FIG. 1 to FIG. 7.

An embodiment of the present disclosure provides an adhesive tape applying device 100 for applying an adhesive tape 200 to a workpiece. The adhesive tape applying device 100 includes an adhesive tape applying mechanism 1 and a shaping mechanism 2. The adhesive tape applying mechanism 1 includes an adhesive tape sucking head 10 for sucking the adhesive tape. The shaping mechanism 2 includes a shaping assembly 20, the shaping assembly 20 includes a first shaping piece 21 and a second shaping piece 22 which are arranged at an interval, and an interval space between the first shaping piece 21 and the second shaping piece 22 forms a shaping channel 20a. The adhesive tape sucking head 10 is configured as follows: the adhesive tape sucking head 10 can pass through the shaping channel 20a, and two end portions of the adhesive tape are respectively in contact with the first shaping piece 21 and the second shaping piece 22, so that the two end portions of the adhesive tape are bent, and the adhesive tape passing through the shaping channel 20a is applied to the workpiece.

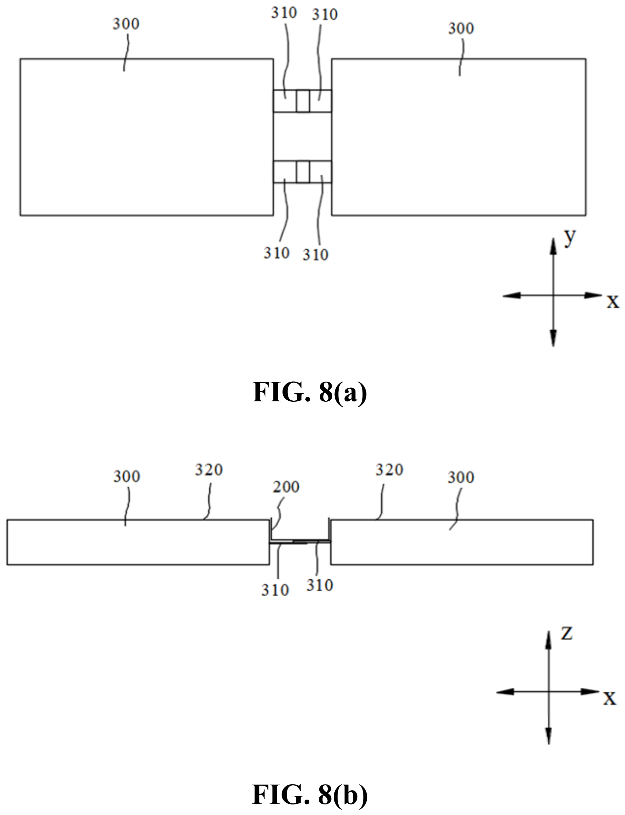

The adhesive tape applying device 100 can be used in a battery production process, for example, for applying adhesive tapes to tabs in the process of pairing electrode assemblies of a battery. Referring to FIG. 8(a) and FIG. 8(b), the workpiece takes an electrode assembly 300 of a battery as an example. In the process of pairing two electrode assemblies, a concave region is formed between opposite end portions of the two electrode assemblies 300, and interconnected tabs 310 of the two electrode assemblies 300 are located in the concave region, so that the opposite end portions of the two electrode assemblies 300 and the connected tabs 310 together form a roughly U-shaped concave structure. When the adhesive tape 200 is applied, if the root of the tab needs to be completely covered, the adhesive tape 200 needs to be shaped into a shape adapted to the concave structure, such as a roughly U shape.

The adhesive tape sucking head 10 can pass through the shaping channel 20a, and two end portions of the adhesive tape are respectively in contact with the first shaping piece 21 and the second shaping piece 22, so that the two end portions of the adhesive tape are bent.

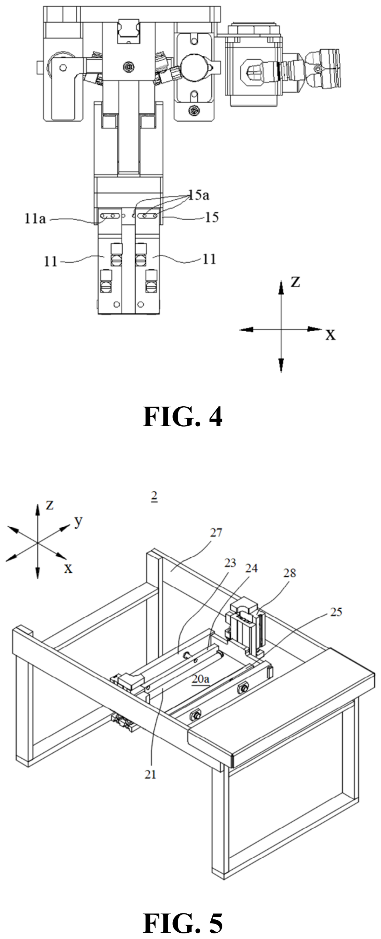

The ability of the adhesive tape sucking head 10 to pass through the shaping channel 20a can be understood as follows: at least one of the adhesive tape sucking head 10 and the shaping assembly 20 moves toward a direction approaching each other, so that the adhesive tape sucking head 10 passes through the shaping channel 20a. For example, referring to FIG. 1, FIG. 2 and FIG. 5, the shaping assembly 20 may be relatively stationary, and the adhesive tape sucking head 10 moves along a second direction z close to the shaping assembly 20 (moves from top to bottom in FIG. 5), so that the adhesive tape sucking head 10 passes through the shaping channel 20a; or, the adhesive tape sucking head 10 may be relatively stationary, and the shaping assembly 20 moves close to the adhesive tape sucking head, so that the adhesive tape sucking head 10 passes through the shaping channel 20a; or, the adhesive tape sucking head 10 and the shaping assembly 20 move toward each other respectively, so that the adhesive tape sucking head 10 passes through the shaping channel 20a.

The adhesive tape sucking head 10 can pass through the shaping channel 20a, and two end portions of the adhesive tape are respectively in contact with the first shaping piece 21 and the second shaping piece 22, so that the two end portions of the adhesive tape are bent. In the process of the adhesive tape sucking head 10 passing through the shaping channel 20a, one end portion of the adhesive tape 200 is in contact with the first shaping piece 21 and passes through a gap between the adhesive tape sucking head 10 located in the shaping channel 20a and the first shaping piece 21, so that the one end portion is bent; and the other end portion of the two end portions of the adhesive tape 200 is in contact with the second shaping piece 22 and passes through a gap between the adhesive tape sucking head 10 located in the shaping channel 20a and the second shaping piece 22, so that the other end portion is bent. In this way, the two bent end portions have a shape extending substantially along the second direction Z.

For example, in this embodiment, the shaping assembly 20 is relatively stationary, and the adhesive tape sucking head 10 moves along the second direction z (e.g., up and down direction) close to the shaping assembly 20, so that the adhesive tape sucking head 10 passes through the shaping channel 20a. When the adhesive tape sucking head 10 sucks the adhesive tape 200, the two end portions of the adhesive tape 200 respectively exceed two side walls of the adhesive tape sucking head 10. In the process of the adhesive tape sucking head 10 passing through the shaping channel 20a, the two end portions of the adhesive tape 200 are respectively in interference and contact with the first shaping piece 21 and the second shaping piece 22, so that the two end portions of the adhesive tape 200 are respectively bent upward.

The adhesive tape 200 passing through the shaping channel 20a is applied to the workpiece, which may be that the two end portions of the adhesive tape 200 are respectively in interference with the first shaping piece 21 and the second shaping piece 22 and are bent, and at the same time, the adhesive tape 200 is applied to the workpiece, that is, the adhesive tape 200 is applied to the workpiece while being bent; or, the two end portions of the adhesive tape 200 are bent and then applied to the workpiece. In the process of applying the adhesive tape, at least a portion of the adhesive tape sucking head 10 passes through the shaping channel 20a in one direction (e.g., from top to bottom along the second direction z) and is located in the shaping channel 20a. In addition, although not shown in the figures, it can be understood that in some embodiments, a delivery mechanism for the electrode assembly 300, such as a delivery belt, is provided below the shaping channel 20a; and in other embodiments, a carrying platform for positioning the electrode assembly 300 is provided below the shaping channel 20a.

In one example, referring to FIG. 1, FIG. 2, FIG. 5, FIG. 6, FIG. 8(a) and FIG. 8(b), in the process of the adhesive tape applying device applying the adhesive tape to the tab, the electrode assembly 300 may be located directly below the shaping channel 20a. In the process of the adhesive tape sucking head 10 passing through the shaping channel 20a, the adhesive tape 200 may be applied to the tab while being bent. Specifically, while the two end portions of the adhesive tape 200 are respectively in interference and contact with the first shaping piece 21 and the second shaping piece 22 and are bent, the part between the two end portions is attached together to the interconnected tabs 310, and the bent portions of the two end portions of the adhesive tape 200 are respectively attached together to two opposite end surfaces of the two electrode assemblies 300. When the two end portions of the adhesive tape 200 are completely separated from the first shaping piece 21 and the second shaping piece 22, the two end portions of the adhesive tape 200 are also attached to the two opposite end surfaces of the electrode assemblies 300, thereby fully covering the tabs.

In another example, in the process of the adhesive tape sucking head 10 passing through the shaping channel 20a, the adhesive tape 200 may be bent and then applied to the tab. Specifically, after the two end portions of the adhesive tape 200 are respectively in interference and contact with the first shaping piece 21 and the second shaping piece 22 and are bent, the part between the two end portions of the adhesive tape 200 is attached together to the interconnected tabs 310 through the adhesive tape sucking head 10, and the bent portions of the two end portions of the adhesive tape 200 are attached to two opposite end surfaces of two tab assemblies, thereby fully covering the tabs.

Therefore, through the mutual cooperation between the adhesive tape sucking head 10 and the shaping assembly 20, the two end portions of the adhesive tape 200 are respectively in contact with the two shaping pieces to bend and shape the two end portions of the adhesive tape 200, and the bent and shaped adhesive tape 200 can be attached to a concave structure of the workpiece more adaptively, so that the workpiece can be stuck more firmly, the production efficiency can be improved, and the labor cost can be reduced. During the battery manufacturing process, the position where two tabs are connected to each other and the root of each tab are effectively protected, and the adhesive tape applying operation of the tab is automatically completed through the adhesive tape applying device to improve the adhesive tape applying efficiency, thereby improving the battery production efficiency, and reducing the labor cost.

In some embodiments, the adhesive tape sucking head 10 includes a first side wall 101 and a second side wall 102 located on two opposite sides along a first direction x; and the adhesive tape sucking head is configured as follows: the adhesive tape sucking head 10 passes through the shaping channel 20a along a second direction z, the two end portions of the adhesive tape 200 are bent by the misalignment action between the first side wall 101 and the first shaping piece 21 along the second direction z and the misalignment action between the second side wall 102 and the second shaping piece 22 along the second direction z, and the second direction z is perpendicular to the first direction x.

When the adhesive tape sucking head 10 sucks the adhesive tape 200, the two end portions of the adhesive tape 200 respectively exceed the first side wall 101 and the second side wall 102.

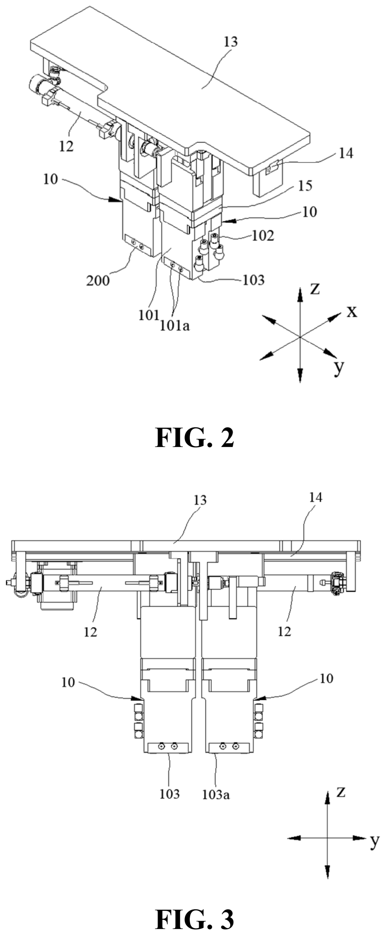

Referring to FIG. 2, FIG. 5 and FIG. 6, the two end portions of the adhesive tape 200 are bent by the misalignment action between the first side wall 101 and the first shaping piece 21 along the second direction z and the misalignment action between the second side wall 102 and the second shaping piece 22 along the second direction z, which can be understood that in the process of the adhesive tape sucking head 10 passing through the shaping channel 20a along the second direction z (e.g., up and down direction), one end portion of the two end portions of the adhesive tape 200 is restricted between the first side wall 101 and the first shaping piece 21, and the other end portion is restricted between the second side wall 102 and the second shaping piece 22, thereby improving the bending effect. "Restriction" can be understood as follows: one end portion of the adhesive tape 200 is squeezed between the first side wall 101 and the first shaping piece 21, so that two opposite sides of the one end portion are respectively in squeezing contact with the first side wall 101 and the first shaping piece 21 and are bent; and the other end portion is squeezed between the second side wall 102 and the second shaping piece 22, so that two opposite sides of the other end portion are respectively in squeezing contact with the second side wall 102 and the second shaping piece 22 and are bent. Of course, "restriction" can also be understood as follows: the two end portions of the adhesive tape 200 are respectively in non-squeezing contact with the first side wall 101 and the first shaping piece 21, as well as the second side wall 102 and the second shaping piece 22, that is, in the process of the adhesive tape sucking head 10 passing through the shaping channel 20a along the second direction z (e.g., up and down direction), one end portion of the adhesive tape 200 is located in a gap between the first side wall 101 and the first shaping piece 21, and the other end portion is located in a gap between the second side wall 102 and the second shaping piece 22, which can also improve the bending effect of the two end portions of the adhesive tape sucking head 10.

By the misalignment action of the two side walls (the first side wall 101 and the second side wall 102) of the adhesive tape sucking head 10 with the first shaping piece 21 and the second shaping piece 22 respectively, the two end portions of the adhesive tape 200 can be substantially bent against the two side walls respectively to improve bending and shaping effects, so that the adhesive tape can be attached to the tab between the two electrode assemblies 300 more adaptively, the tab can be stuck more firmly, and thus the tab is fully protected.

In some embodiments, referring to FIG. 2 and FIG. 3, the adhesive tape sucking head 10 includes a bottom wall 103, the bottom wall 103 is connected to the first side wall 101 and the second side wall 102, the bottom wall 103 is provided with a bottom wall suction hole 103a, the first side wall 101 is provided with a first side wall suction hole 101a, the second side wall 102 is provided with a second side wall suction hole (not marked in the figures), the first side wall suction hole 101a and the second side wall suction hole are respectively used for sucking the two end portions of the adhesive tape 200, and the bottom wall suction hole 103a is used for sucking the part between the two end portions of the adhesive tape 200.

The adhesive tape sucking head 10 sucks the part between the two end portions of the adhesive tape 200 through the bottom wall suction hole 103a, and sucks the two end portions of the adhesive tape 200 through the first side wall suction hole 101a and the second side wall suction hole, so that the two end portions can be kept in a bent state. In this way, in the process of the adhesive tape sucking head 10 passing the sucked adhesive tape 200 through the shaping channel 20a along the second direction z (e.g., up and down direction) and applying the sucked adhesive tape 200 to the tab 310, the risk of tearing possibly caused by the adhesive tape 200 pulling the electrode assembly 300 due to the two end portions of the adhesive tape 200 sticking to a large surface 320 (shown in FIG. 8(b)) of the electrode assembly 300 can be avoided, thereby improving the sticking reliability.

Exemplarily, the first side wall suction hole 101a, the second side wall suction hole and the bottom wall suction hole 103a may be connected to a negative pressure device (not shown in the figures) through gas channels respectively.

The negative pressure device can provide negative pressure to adsorb the adhesive tape 200, and the negative pressure device can release the negative pressure to release the adhesive tape 200, thereby being convenient to control the adhesive tape sucking head to suck and release the adhesive tape.

Exemplarily, the number of the first side wall suction hole 101a, the second side wall suction hole and the bottom wall suction hole 103a may be 1, 2, 3 or more.

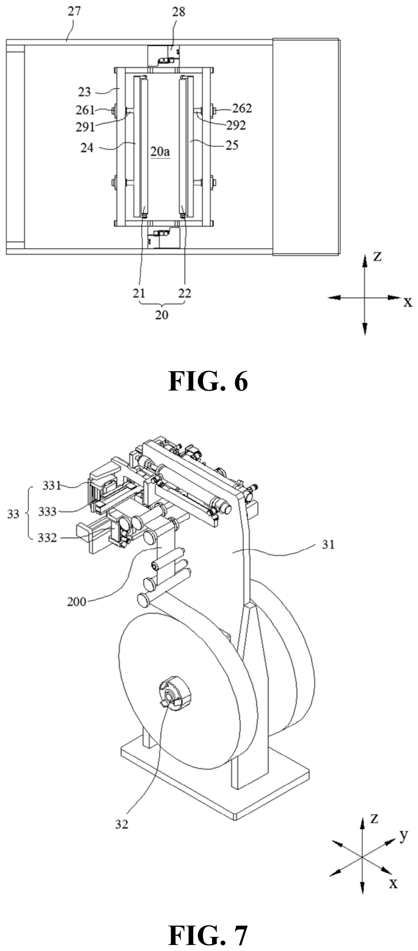

In some embodiments, referring to FIG. 5 and FIG. 6, the first shaping piece 21 includes a first rotating roller that can rotate freely around an axis, the second shaping piece 22 includes a second rotating roller that can rotate freely around an axis, and the first rotating roller and the second rotating roller are parallel to each other and are located at the same position in the second direction z.

The first rotating roller and the second rotating roller freely rotating around the axis can be understood as follows: the first rotating roller and the second rotating roller can rotate around their own axis under the action of an external contact force, that is, the first rotating roller and the second rotating roller do not need additional driving components to provide the power required for rotation. For example, in the process of the adhesive tape sucking head 10 passing through the shaping channel 20a along the second direction z, the two end portions of the adhesive tape 200 are respectively in contact with the first rotating roller and the second rotating roller, and the first rotating roller and the second rotating roller are driven to rotate by the adhesive force between adhesive surfaces at the two end portions and the first rotating roller and the second rotating roller respectively.

By means of the first rotating roller and the second rotating roller rotating freely around the axis, the friction of contact between the two end portions of the adhesive tape 200 and the first rotating roller and the second rotating roller respectively can be reduced in the process of the adhesive tape sucking head 10 passing through the shaping channel 20a along the second direction z, so that the adhesive tape sucking head 10 can pass through the shaping channel 20a more smoothly and complete bending and adhesive tape applying operations.

In some embodiments, the first shaping piece 21 includes a first shaping plate, and the second shaping piece 22 includes a second shaping plate.

In the process of the adhesive tape sucking head 10 passing through the shaping channel 20a along the second direction z, the first shaping plate and the second shaping plate are in contact with the two end portions of the adhesive tape 200 respectively to bend the adhesive tape 200 in a scraping manner, thereby improving the bending effect.

In some embodiments, at least one of the first shaping piece 21 and the second shaping piece 22 is configured to be able to float along the first direction x.

It can be understood that the first shaping piece 21 can move close to or away from the second shaping piece 22 along the first direction x. For example, the first shaping piece 21 is stationary, and the second shaping piece 22 moves close to or away from the first shaping piece 21 along the first direction x; or, the second shaping piece 22 is stationary, and the first shaping piece 21 moves close to or away from the second shaping piece 22 along the first direction x; or, the first shaping piece 21 and the second shaping piece 22 can both move close to or away from each other.

Therefore, in the process of the adhesive tape sucking head 10 passing through the shaping channel 20a along the second direction z, one end portion of the two end portions of the adhesive tape 200 can be squeezed between the first side wall 101 and the first shaping piece 21, and the other end portion can be squeezed between the second side wall 102 and the second shaping piece 22. In this way, the two end portions are always bent against the first side wall 101 and the second side wall 102 respectively to improve the shaping effect, so that the adhesive tape can be applied to the tab more adaptively, the tab can be stuck more firmly, and thus the tab is fully protected.

In some embodiments, referring to FIG. 5 and FIG. 6, the shaping assembly 20 includes a shaping bracket 23, a first shaping mounting frame 24 and a second shaping mounting frame 25, the first shaping piece 21 is arranged on the first shaping mounting frame 24, the second shaping piece 22 is arranged on the second shaping mounting frame 25, a first elastic member 291 is connected between the shaping bracket 23 and the first shaping mounting frame 24, and the first elastic member 291 can extend and retract along the first direction x so that the first shaping piece 21 floats along the first direction x; and/or a second elastic member 292 is connected between the shaping bracket 23 and the second shaping mounting frame 25, and the second elastic member 292 can extend and retract along the first direction x so that the second shaping piece 22 floats along the first direction x.

The shaping bracket 23 may be in the form of a frame structure. The first shaping mounting frame 24 is used for supporting the first shaping piece 21, and the second shaping mounting frame 25 is used for supporting the second shaping piece 22. Exemplarily, when the first shaping piece 21 is a first rotating roller and the second shaping piece 22 is a second rotating roller, the first shaping piece 21 is rotatably arranged on the first shaping mounting frame 24, and the second shaping piece 22 is rotatably arranged on the second shaping mounting frame 25.

In the process of the adhesive tape sucking head 10 passing through the shaping channel 20a along the second direction z, by means of extension and retraction of at least one of the first elastic member 291 and the second elastic member 292 along the first direction x, one end portion of the two end portions of the adhesive tape 200 is squeezed between the first side wall 101 and the first shaping piece 21, and the other end portion is squeezed between the second side wall 102 and the second shaping piece 22. In this way, the surfaces of the two end portions opposite to the adhesive surface (e.g., non-adhesive surface) are always bent against the first side wall 101 and the second side wall 102 respectively to improve the shaping effect, so that the adhesive tape can be applied to the tab more adaptively, and thus the tab can be stuck more firmly.

In some embodiments, a first guide member 261 is arranged on the shaping bracket 23, the first guide member 261 extends along the first direction x, and the first shaping mounting frame 24 is slidably arranged on the first guide member 261; and/or a second guide member 262 is arranged on the shaping bracket 23, the second guide member 262 extends along the first direction x, and the second shaping mounting frame 25 is slidably arranged on the second guide member 262.

One end of the first guide member 261 can be fixed on a side plate of the shaping bracket 23, and the other end passes through a sliding hole on the first shaping mounting frame 24, so as to achieve the sliding connection between the first shaping mounting frame 24 and the first guide member 261, so that the first shaping piece 21 can float more smoothly along the first direction x.

One end of the second guide member 262 can be fixed on another side plate of the shaping bracket 23, and the other end passes through a sliding hole on the second shaping mounting frame 25, so as to achieve the sliding connection between the second shaping mounting frame 25 and the second guide member 262, so that the second shaping piece 22 can float more smoothly along the first direction x.

In some embodiments, the shaping mechanism 2 further includes a shaping frame 27 and a shaping driving member 28 arranged on the shaping frame 27, the driving end of the shaping driving member 28 is connected to the shaping bracket 23, and the shaping driving member 28 can drive the shaping assembly 20 to move close to or away from the workpiece along the second direction z.

By driving the shaping assembly 20 to move close to or away from the workpiece along the second direction z through the shaping driving member 28, the distance between the shaping assembly 20 and the workpiece can be adjusted to adapt to different workpiece sizes.

The shaping driving member 28 may be a cylinder, and the driving end of the cylinder can extend and retract along the second direction z, thereby driving the shaping assembly 20 to move close to or away from the workpiece along the second direction z.

The shaping driving member 28 may also be a driving structure such as a hydraulic cylinder, a linear motor, etc., or may also be a combination of a motor and a transmission component. The transmission component may be a belt transmission component, a chain transmission component, a lead screw nut transmission component, etc.

In some embodiments, referring to FIG. 1 to FIG. 4, at least two groups of adhesive tape sucking heads 10 are provided, two adjacent groups of adhesive tape sucking heads 10 are arranged at an interval along a third direction y, and the third direction y is perpendicular to the first direction x and perpendicular to the second direction z.

Two, three, four, five or more groups of adhesive tape sucking heads 10 may be provided.

A plurality of groups of adhesive tape sucking heads 10 can suck a plurality of adhesive tapes 200 at the same time. In the process of the adhesive tape sucking head 10 passing through the shaping channel 20a along the second direction z, a plurality of adhesive tapes 200 can be bent at the same time, and then, the bent adhesive tapes 200 can be applied to a plurality of workpieces or a plurality of different parts of the same workpiece at the same time, thereby improving the applying efficiency.

For example, referring to FIG. 8(a) and FIG. 8(b), when the adhesive tape is applied to the paired electrode assemblies by the adhesive tape applying device 100, two tabs 310 arranged along the third direction y are led out from one end of a stacking body of each electrode assembly. Two groups of adhesive tape sucking heads 10 may be provided. In the process of the adhesive tape sucking heads 10 passing through the shaping channel 20a along the second direction z, the two groups of adhesive tape sucking heads 10 can bend two adhesive tapes 200 at the same time, so as to be respectively applied to two tabs 310 at the same time, thereby improving the applying efficiency.

In some embodiments, two adjacent groups of adhesive tape sucking heads 10 are configured to be able to move close to or away from each other along the third direction y. Therefore, the distance between the two groups of adhesive tape sucking heads 10 in the third direction y can be adjusted so as to adapt to more types of workpieces.

At least one of two adjacent groups of adhesive tape sucking heads 10 is close to or away from the other group. That is, only one of two adjacent groups of adhesive tape sucking heads 10 can move close to or away from the other group, or both groups can move close to or away from each other.

For example, for different types of batteries, when electrode assemblies are paired, the distance between two tabs 310 along the third direction y may be different. By adjusting the distance between the two groups of adhesive tape sucking heads 10 in the third direction y to match the distance between the two tabs 310, the adhesive tape applying operation can be performed for different types of batteries, thereby improving the universality.

In some embodiments, the adhesive tape applying mechanism 1 further includes an adhesive tape sucking head driving member for driving at least one group of adhesive tape sucking heads 10 to move along the third direction y.

Exemplarily, each group of adhesive tape sucking heads 10 can be driven by an adhesive tape sucking head driving member 12 respectively. The adhesive tape sucking head driving member 12 may be a driving structure such as a cylinder, a hydraulic cylinder, a linear motor, a servo motor, etc., or may also be a combination of a motor and a transmission component. The transmission component may be a belt transmission component, a chain transmission component, a lead screw nut transmission component, etc.

Exemplarily, the adhesive tape applying mechanism 1 further includes an adhesive tape sucking head bracket 13, a guide rail 14 extending along the third direction y is arranged on the adhesive tape sucking head bracket 13, each group of adhesive tape sucking heads 10 is slidably connected to the guide rail 14 respectively, the adhesive tape sucking head driving member 12 may be a cylinder fixed on the adhesive tape sucking head bracket 13, two cylinders are provided, and the telescopic end of each cylinder is respectively connected to the adhesive tape sucking head 10 so as to drive each group of adhesive tape sucking heads 10 to move close to or away from each other along the third direction y.

In some embodiments, referring to FIG. 1 to FIG. 4, each group of adhesive tape sucking heads 10 includes two adhesive tape sucking blocks 11, and the two adhesive tape sucking blocks 11 are arranged at an interval along the first direction x and are configured to be able to move close to or away from each other along the first direction x. Therefore, the distance between the two adhesive tape sucking blocks 11 of each group of adhesive tape sucking heads 10 in the first direction x can be adjusted to adapt to different types of workpieces or different parts of the same workpiece.

Exemplarily, referring to FIG. 8(a) and FIG. 8(b), for different types of batteries, when electrode assemblies are paired, the distance between two stacking bodies in the first direction x may be different. By adjusting the distance between the two adhesive tape sucking blocks 11 of each group of adhesive tape sucking heads 10 in the first direction x to match the distance between the two stacking bodies, the adhesive tape applying operation can be performed for different types of batteries, thereby improving the universality.

Exemplarily, each group of adhesive tape sucking heads 10 may include a fixed block 15, a plurality of positioning holes 15a distributed along the first direction x are arranged on the fixed block 15, at least one of the two adhesive tape sucking blocks 11 is provided with an adjusting hole 11a extending along the first direction x, and the adjusting hole 11a is fixedly connected to the corresponding positioning hole 15a through a fastener.

The distance between the two adhesive tape sucking blocks 11 is adjusted by enabling the adjusting hole 11a to correspond to the positioning holes 15a at different positions. Each group of adhesive tape sucking heads 10 can be slidably connected to the guide rail 14 on the adhesive tape sucking head bracket 13 through the fixed block 15.

In some embodiments, referring to FIG. 1 and FIG. 7, the adhesive tape applying device 100 further includes an adhesive tape supply mechanism 3, the adhesive tape supply mechanism 3 includes at least two adhesive tape supply units 30, each adhesive tape supply unit 30 is configured to be able to switch between an adhesive tape replacing station A and an adhesive tape supply station B, the adhesive tape sucking head 10 sucks the adhesive tape cut from an adhesive tape roll carried by the adhesive tape supply unit 30 at the adhesive tape supply station B, and the adhesive tape replacing station A is used for replacing the adhesive tape roll.

When one or a plurality of adhesive tape supply units 30 located at the adhesive tape supply station B supply the adhesive tape to the adhesive tape sucking head 10, the remaining adhesive tape supply units 30 are located at the adhesive tape replacing stations A, and adhesive tape rolls of the adhesive tape supply units 30 at the adhesive tape replacing stations A can be replaced for later use, for example, empty adhesive tape rolls are replaced with new adhesive tape rolls. When the adhesive tape supply unit 30 at the adhesive tape supply station B needs to replace the adhesive tape roll, for example, when the adhesive tape roll is exhausted, one or a plurality of adhesive tape supply units 30 at the adhesive tape supply station B are switched to the adhesive tape replacing stations A, and then, one or a plurality of adhesive tape supply units 30 with replaced new adhesive tape rolls at the adhesive tape replacing stations A are switched to the adhesive tape supply station B, thereby supplying the adhesive tape to the adhesive tape sucking head 10; and adhesive tape rolls of one or a plurality of adhesive tape supply units 30 switched to the adhesive tape replacing stations A can be replaced for later use, and this cycle is repeated to achieve the non-stop replacement of adhesive tape rolls, thereby improving the production efficiency.

In an example, when any one of at least two adhesive tape supply units 30 is located at the adhesive tape supply station B, the remaining adhesive tape supply units 30 are located at respective adhesive tape replacing stations A.

The number of the adhesive tape supply units 30 corresponds to the number of the adhesive tape replacing stations A, that is, the adhesive tape supply units 30 are in one-to-one correspondence to the adhesive tape replacing stations A. Each adhesive tape supply unit 30 can be switched between the adhesive tape supply station B and the respective adhesive tape replacing station A, thereby facilitating the control of each adhesive tape supply unit 30.

For example, referring to FIG. 1, two adhesive tape supply units 30 and two adhesive tape replacing stations A are respectively provided, namely, a first adhesive tape supply unit 30a and a first adhesive tape replacing station A1 corresponding to the first adhesive tape supply unit 30a, as well as a second adhesive tape supply unit 30b and a second adhesive tape replacing station A2 corresponding to the second adhesive tape supply unit 30b. When the first adhesive tape supply unit 30a is located at the adhesive tape supply station B to supply the adhesive tape to the adhesive tape sucking head 10, the second adhesive tape supply unit 30b is located at the second adhesive tape replacing station A2 for later use; when the adhesive tape roll of the first adhesive tape supply unit 30a needs to be replaced, the first adhesive tape supply unit 30a is switched from the adhesive tape supply station B to the first adhesive tape replacing station A1, and the second adhesive tape supply unit 30b carrying a new adhesive tape roll is switched from the second adhesive tape replacing station A2 to the adhesive tape supply station B, thereby providing the adhesive tape for the adhesive tape sucking head 10; and the adhesive tape roll of the first adhesive tape supply unit 30a switched to the first adhesive tape replacing station Al can be replaced for later use.

In some embodiments, the adhesive tape supply mechanism 3 further includes a sliding rail 301 and at least two adhesive tape supply driving members 302, each adhesive tape supply unit 30 can be slidably arranged on the sliding rail 301, and each adhesive tape supply driving member 302 is configured to respectively drive the adhesive tape supply unit 30 to slide between the adhesive tape replacing station A and the adhesive tape supply station B.

Each adhesive tape supply unit 30 is respectively driven by an independent adhesive tape supply driving member 302, so that each adhesive tape supply unit 30 is controlled respectively, and the structure is simplified.

In an example, each adhesive tape supply driving member 302 includes a telescopic cylinder, and the telescopic end of each telescopic cylinder is respectively connected to the adhesive tape supply unit 30.

The adhesive tape supply driving member 302 may also be a driving structure such as a hydraulic cylinder, a linear motor, etc., or may also be a combination of a motor and a transmission component. The transmission component may be a belt transmission component, a chain transmission component, a lead screw nut transmission component, etc.

In some embodiments, referring to FIG. 1 and FIG. 7, each adhesive tape supply unit 30 includes an adhesive tape supply bracket 31, an adhesive tape roll mounting shaft 32 and an adhesive tape delivery mechanism 33, the adhesive tape roll mounting shaft 32 is respectively arranged on both sides of the adhesive tape supply bracket 31 in the third direction y, and the adhesive tape delivery mechanism 33 is respectively arranged on both sides of the adhesive tape supply bracket 31 in the third direction y.

Each adhesive tape roll mounting shaft 32 is used for carrying the adhesive tape roll, and each adhesive tape delivery mechanism 33 is used for respectively delivering the adhesive tape on the adhesive tape roll. Therefore, each adhesive tape supply unit 30 can deliver two adhesive tapes at the same time, so that the adhesive tape sucking head 10 can suck the two adhesive tapes at a time, thereby improving the adhesive tape delivery efficiency, and further improving the battery production efficiency.

In some embodiments, the adhesive tape delivery mechanism 33 includes an adhesive tape pulling mechanism 331, an adhesive tape pressing mechanism 332 and an adhesive tape cutting mechanism 333, and the adhesive tape pressing mechanism 332, the adhesive tape cutting mechanism 333 and the adhesive tape pulling mechanism 331 are arranged in sequence along a delivery direction of the adhesive tape 200; and the adhesive tape pulling mechanism 331 is used for pulling the adhesive tape 200 to unwind, the adhesive tape pressing mechanism 332 is used for pressing the adhesive tape 200 in the second direction z, and the adhesive tape cutting mechanism 333 is used for cutting the adhesive tape 200.

First, the adhesive tape pulling mechanism 331 pulls the adhesive tape 200 along the delivery direction of the adhesive tape (e.g., first direction x), so that the adhesive tape 200 is pulled out for a suitable length; subsequently, the adhesive tape pressing mechanism 332 presses the adhesive tape 200 in the second direction z, so that the section of pulled-out adhesive tape 200 has a certain tension; then, the adhesive tape sucking head 10 sucks the section of pulled-out adhesive tape 200; and finally, the adhesive tape cutting mechanism 333 cuts the section of pulled-out adhesive tape 200, and the adhesive tape pulling mechanism 331 releases the section of pulled-out adhesive tape 200, so that the adhesive tape sucking head 10 sucks the section of pulled-out adhesive tape 200 and cooperates with the shaping assembly 20 to bend the adhesive tape 200 and then apply the adhesive tape 200 to the workpiece, so as to automatically complete an adhesive tape delivery and adhesive tape applying operation, thereby improving the battery production efficiency.

In some embodiments, the adhesive tape pulling mechanism 331 includes a clamping jaw cylinder, a clamping jaw arranged on the clamping jaw cylinder, and an adhesive tape pulling cylinder for driving the clamping jaw cylinder to move. The clamping jaw cylinder is used for driving the clamping jaw to clamp and release the adhesive tape 200, and the adhesive tape pulling cylinder is used for driving the clamping jaw cylinder to move so that the adhesive tape 200 is pulled out for a suitable cut length.

In some embodiments, the adhesive tape pressing mechanism 332 includes an adhesive tape pressing cylinder and a pressing block arranged at the driving end of the adhesive tape pressing cylinder, and the adhesive tape pressing cylinder is used for driving the pressing block to move along the second direction z to press the adhesive tape 200.

In some embodiments, the adhesive tape cutting mechanism 333 includes an adhesive tape cutting cylinder and a cutter arranged at the driving end of the adhesive tape cutting cylinder, and the adhesive tape cutting cylinder is used for driving the cutter to move to cut the adhesive tape 200.

In some embodiments, referring to FIG. 1, the adhesive tape applying mechanism 1 further includes a movable frame 120, and the movable frame 120 is connected to the adhesive tape sucking head 10 and is used for driving the adhesive tape sucking head 10 to move along the first direction x and the third direction y respectively.

The adhesive tape sucking head 10 can reciprocate between the adhesive tape supply station B and the adhesive tape applying station along the first direction x, and pass through the shaping channel along the second direction z. Specifically, the adhesive tape sucking head 10 moves along the first direction x to the adhesive tape supply station B to suck the cut adhesive tape 200 and then returns to the adhesive tape applying station, and subsequently, the adhesive tape sucking head 10 passes through the shaping channel along the second direction z to bend and shape the sucked adhesive tape 200 and apply the adhesive tape 200 to the workpiece. Thus, the adhesive tape sucking head 10 can automatically complete adhesive tape sucking and adhesive tape applying operations, thereby improving the production efficiency.

Exemplarily, the movable frame 120 includes a first support frame 121, a second support frame 122, a third driving member and a fourth driving member. The first support frame 121 includes a first guide rail extending along the first direction x. The second support frame 122 includes a second guide rail extending along the second direction z. The second support frame 122 is slidably connected to the first guide rail. The adhesive tape sucking head 10 is slidably connected to the second guide rail. The driving end of the third driving member is connected to the second support frame 122. The fourth driving member is arranged on the second support frame 122, and the driving end of the fourth driving member is connected to the adhesive tape sucking head 10. The third driving member is used for driving the second support frame 122 to move along the first guide rail, thereby driving the adhesive tape sucking head 10 and the fourth driving member to move along the first direction x together. The fourth driving member is used for driving the adhesive tape sucking head 10 to move along the second guide rail in the second direction z.

The adhesive tape supply driving member 302 may be a driving structure such as a cylinder, a hydraulic cylinder, a linear motor, etc., or may also be a combination of a motor and a transmission component. The transmission component may be a belt transmission component, a chain transmission component, a lead screw nut transmission component, etc.

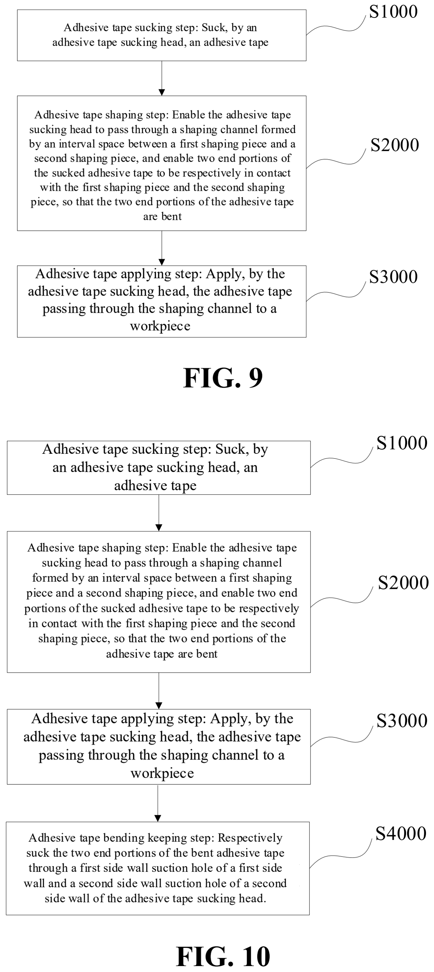

Referring to FIG. 9, an embodiment of the present disclosure further provides an adhesive tape applying method for applying an adhesive tape to a workpiece. The adhesive tape applying method includes:
S1000: an adhesive tape sucking step: an adhesive tape sucking head sucks the adhesive tape;
S2000: an adhesive tape shaping step: the adhesive tape sucking head passes through a shaping channel formed by an interval space between a first shaping piece and a second shaping piece, and two end portions of the sucked adhesive tape are respectively in contact with the first shaping piece and the second shaping piece, so that the two end portions of the adhesive tape are bent; and
S3000: an adhesive tape applying step: the adhesive tape sucking head applies the adhesive tape passing through the shaping channel to the workpiece,
where in the adhesive tape shaping step, one end portion of two end portions of the adhesive tape is in contact with the first shaping piece and passes through a gap between the adhesive tape sucking head located in the shaping channel and the first shaping piece, and the other end portion of the two end portions of the adhesive tape is in contact with the second shaping piece and passes through a gap between the adhesive tape sucking head located in the shaping channel and the second shaping piece.

In S1000, the adhesive tape sucking head 10 can generate negative pressure through a negative pressure device to suck the middle portion of the adhesive tape 200, so that the two end portions of the adhesive tape 200 respectively exceed two side walls of the adhesive tape sucking head 10.

In S2000, at least one of the adhesive tape sucking head 10 and the shaping assembly 20 moves close to each other, so that the adhesive tape sucking head 10 passes through the shaping channel 20a. For example, the shaping assembly 20 may be relatively stationary, the adhesive tape sucking head 10 moves close to the shaping assembly 20, the adhesive tape sucking head 10 passes through the shaping channel 20a, and the two end portions of the adhesive tape 200 are respectively in contact with the first shaping piece 21 and the second shaping piece 22, so that the two end portions of the adhesive tape are bent.

In S3000, when the adhesive tape sucking head 10 passes through the shaping channel 20a, the adhesive tape 200 may be applied to the workpiece while the two end portions of the adhesive tape 200 are bent; or the two end portions of the adhesive tape 200 may be applied to the workpiece after being bent.

Referring to FIG. 8(a) and FIG. 8(b), the workpiece takes an electrode assembly 300 of a battery as an example. In the process of pairing two electrode assemblies, a concave region is formed between opposite end portions of the two electrode assemblies 300, and interconnected tabs 310 of the two electrode assemblies 300 are located in the concave region, so that the opposite end portions of the two electrode assemblies 300 and the connected tabs 310 together form a roughly U-shaped concave structure. When the adhesive tape 200 is applied, if the root of the tab needs to be completely covered, the adhesive tape 200 needs to be shaped into a shape adapted to the concave structure, such as a roughly U shape.

The electrode assembly 300 may be located directly below the shaping channel 20a. In the process of the adhesive tape sucking head 10 passing through the shaping channel 20a, the adhesive tape 200 may be applied to the tab while being bent. Specifically, while the two end portions of the adhesive tape 200 are respectively in interference and contact with the first shaping piece 21 and the second shaping piece 22 and are bent, the part between the two end portions is attached together to the interconnected tabs 310, and the bent portions of the two end portions of the adhesive tape 200 are respectively attached together to two opposite end surfaces of the two electrode assemblies 300. When the two end portions of the adhesive tape 200 are completely separated from the first shaping piece 21 and the second shaping piece 22, the two end portions of the adhesive tape 200 are also attached to the two opposite end surfaces of the electrode assemblies 300, thereby fully covering the tabs.

Therefore, through the mutual cooperation between the adhesive tape sucking head 10 and the shaping assembly 20, the two end portions of the adhesive tape 200 are respectively in contact with the two shaping pieces to bend and shape the two end portions of the adhesive tape 200, and the bent and shaped adhesive tape 200 can be attached to a concave structure of the workpiece more adaptively, so that the workpiece can be stuck more firmly, the production efficiency can be improved, and the labor cost can be reduced. During the battery manufacturing process, the position where two tabs are connected to each other and the root of each tab are effectively protected, and the adhesive tape applying operation of the tab is automatically completed through the adhesive tape applying device to improve the adhesive tape applying efficiency, thereby improving the battery production efficiency, and reducing the labor cost.

In some embodiments, referring to FIG. 10, after the adhesive tape shaping step and before the adhesive tape applying step, the adhesive tape applying method further includes:
S4000: an adhesive tape bending keeping step: the two end portions of the bent adhesive tape are respectively sucked through a first side wall suction hole of a first side wall and a second side wall suction hole of a second side wall of the adhesive tape sucking head.

In the process of the adhesive tape sucking head 10 passing through the shaping channel 20a, the two end portions of the adhesive tape 200 are respectively bent toward the first side wall 101 and the second side wall 102, and the two end portions of the adhesive tape 200 are sucked through the first side wall suction hole 101a and the second side wall suction hole, so that the two end portions can be kept in a bent state, thereby reducing or avoiding the risk of tearing possibly caused by the adhesive tape pulling the tab 310 due to the two end portions of the adhesive tape 200 sticking to a large surface of a stacking body.

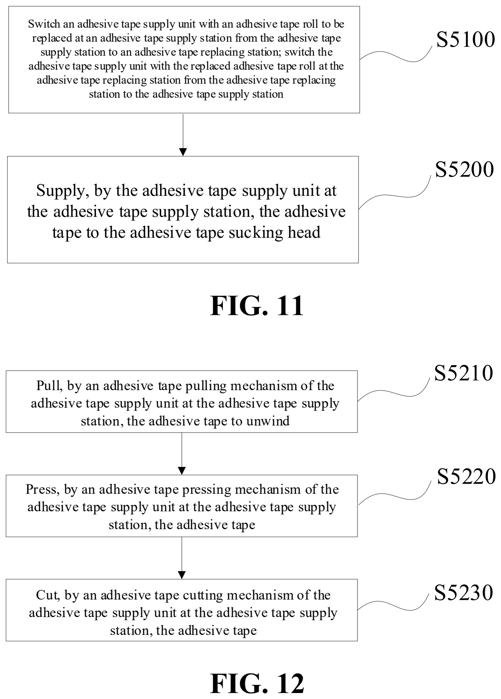

In some embodiments, referring to FIG. 11, the adhesive tape applying method further includes: an adhesive tape supply step, and the adhesive tape supply step includes:
S5100: an adhesive tape supply unit with an adhesive tape roll to be replaced at an adhesive tape supply station is switched from the adhesive tape supply station to an adhesive tape replacing station; the adhesive tape supply unit with the replaced adhesive tape roll at the adhesive tape replacing station is switched from the adhesive tape replacing station to the adhesive tape supply station; and
S5200: the adhesive tape supply unit at the adhesive tape supply station supplies the adhesive tape to the adhesive tape sucking head.

At least two adhesive tape supply units 30 may be provided. When one or a plurality of adhesive tape supply units 30 located at the adhesive tape supply station B supply the adhesive tape to the adhesive tape sucking head 10, the remaining adhesive tape supply units 30 are located at the adhesive tape replacing stations A, and adhesive tape rolls of the adhesive tape supply units 30 at the adhesive tape replacing stations A can be replaced for later use, for example, empty adhesive tape rolls are replaced with new adhesive tape rolls. When the adhesive tape supply unit 30 at the adhesive tape supply station B needs to replace the adhesive tape roll, for example, when the adhesive tape roll is exhausted, one or a plurality of adhesive tape supply units 30 at the adhesive tape supply station B are switched to the adhesive tape replacing stations A, and then, one or a plurality of adhesive tape supply units 30 with replaced new adhesive tape rolls at the adhesive tape replacing stations A are switched to the adhesive tape supply station B, thereby supplying the adhesive tape to the adhesive tape sucking head 10; and adhesive tape rolls of one or a plurality of adhesive tape supply units 30 switched to the adhesive tape replacing stations A can be replaced for later use, and this cycle is repeated to achieve the non-stop replacement of adhesive tape rolls, thereby improving the production efficiency.

In some embodiments, referring to FIG. 12, the step of the adhesive tape supply unit at the adhesive tape supply station supplying the adhesive tape to the adhesive tape sucking head includes:
S5210: an adhesive tape pulling mechanism of the adhesive tape supply unit at the adhesive tape supply station pulls the adhesive tape to unwind;
S5220: an adhesive tape pressing mechanism of the adhesive tape supply unit at the adhesive tape supply station presses the adhesive tape; and
S5230: an adhesive tape cutting mechanism of the adhesive tape supply unit at the adhesive tape supply station cuts the adhesive tape.

The adhesive tape pulling mechanism 331 pulls the adhesive tape 200 along the delivery direction of the adhesive tape (e.g., first direction x), so that the adhesive tape 200 is pulled out for a suitable length; subsequently, the adhesive tape pressing mechanism 332 presses the adhesive tape 200 in the second direction z, so that under the combined action of the pulling force of the adhesive tape pulling mechanism 331 and the pressure of the adhesive tape pressing mechanism 332, the pulled-out adhesive tape 200 has a certain tension; then, the adhesive tape sucking head 10 sucks the pulled-out adhesive tape 200; and finally, the adhesive tape cutting mechanism 333 cuts the pulled-out adhesive tape 200, and the adhesive tape pulling mechanism 331 releases the adhesive tape 200, so that the adhesive tape sucking head 10 sucks the exposed adhesive tape 200 and cooperates with the shaping assembly 20 to bend the adhesive tape 200 and then apply the adhesive tape 200 to the workpiece, so as to complete an adhesive tape applying operation.

An embodiment of the present disclosure further provides a battery production line, including a supply device for supplying a workpiece; and the adhesive tape applying device 100 as mentioned above.

Through the mutual cooperation between the adhesive tape sucking head 10 and the shaping assembly 20, the two end portions of the adhesive tape 200 are respectively in contact with the two shaping pieces to bend and shape the two end portions of the adhesive tape 200, and the bent and shaped adhesive tape 200 can be attached to a concave structure of the workpiece more adaptively, so that the workpiece can be stuck more firmly, the production efficiency can be improved, and the labor cost can be reduced.

In some embodiments, the workpiece includes at least two electrode assemblies, tabs of two adjacent electrode assemblies are connected to each other, and the tabs are located in a concave space between the two adjacent electrode assemblies; and the adhesive tape sucking head is configured as follows: the adhesive tape passing through the shaping channel is applied to the tab and covers the tab.

During the battery manufacturing process, the position where two tabs are connected to each other and the root of each tab are effectively protected, and the adhesive tape applying operation of the tab is automatically completed through the adhesive tape applying device to improve the adhesive tape applying efficiency, thereby improving the battery production efficiency, and reducing the labor cost.

The above embodiments are only used to illustrate the technical solutions of the present disclosure, but are not limited thereto. Although the present disclosure is described in detail with reference to the above embodiments, those of ordinary skill in the art should understand that the technical solutions recorded in the above embodiments still can be modified, or some or all of the technical features thereof can be replaced equivalently. These modifications or replacements do not make the essence of the corresponding technical solution depart from the scope of the technical solution of each embodiment of the present disclosure, and shall fall within the scope of the specification of the present disclosure. In particular, the technical features mentioned in the various embodiments can be combined in any manner as long as there is no structural conflict. The present disclosure is not limited to the specific embodiments disclosed herein, but includes all technical solutions falling within the scope of the technical content.

## Claims

1. An adhesive tape applying device for applying an adhesive tape to a workpiece, the adhesive tape applying device comprising:
an adhesive tape applying mechanism, comprising an adhesive tape sucking head for sucking the adhesive tape; and
a shaping mechanism, comprising a shaping assembly, the shaping assembly comprising a first shaping piece and a second shaping piece which are arranged at an interval, and an interval space between the first shaping piece and the second shaping piece forming a shaping channel,
wherein the adhesive tape sucking head is configured as follows: the adhesive tape sucking head can pass through the shaping channel and enable one end portion of two end portions of the adhesive tape to be in contact with the first shaping piece and pass through a gap between the adhesive tape sucking head located in the shaping channel and the first shaping piece and the other end portion of the two end portions of the adhesive tape to be in contact with the second shaping piece and pass through a gap between the adhesive tape sucking head located in the shaping channel and the second shaping piece, so that the two end portions of the adhesive tape are bent, and the adhesive tape passing through the shaping channel is applied to the workpiece.

2. The adhesive tape applying device according to claim 1, wherein
the adhesive tape sucking head comprises a first side wall and a second side wall located on two opposite sides of a first direction; and
the adhesive tape sucking head is configured as follows: the adhesive tape sucking head passes through the shaping channel along a second direction, the two end portions of the adhesive tape are bent by the misalignment action between the first side wall and the first shaping piece along the second direction and the misalignment action between the second side wall and the second shaping piece along the second direction, and the second direction is perpendicular to the first direction.

3. The adhesive tape applying device according to claim 2, wherein
the adhesive tape sucking head comprises a bottom wall, the bottom wall is connected to the first side wall and the second side wall, the bottom wall is provided with a bottom wall suction hole, the first side wall is provided with a first side wall suction hole, the second side wall is provided with a second side wall suction hole, the first side wall suction hole and the second side wall suction hole are respectively used for sucking the two end portions of the adhesive tape, and the bottom wall suction hole is used for sucking the part between the two end portions of the adhesive tape.

4. The adhesive tape applying device according to claim 3, wherein
the first side wall suction hole, the second side wall suction hole and the bottom wall suction hole are respectively connected to a negative pressure device through a gas channel.

5. The adhesive tape applying device according to any one of claims 2 to 4, wherein
the first shaping piece comprises a first rotating roller that can rotate freely around an axis, the second shaping piece comprises a second rotating roller that can rotate freely around an axis, and the first rotating roller and the second rotating roller are parallel to each other and are located at the same position in the second direction.

6. The adhesive tape applying device according to any one of claims 2 to 5, wherein
the first shaping piece comprises a first shaping plate, and the second shaping piece comprises a second shaping plate.

7. The adhesive tape applying device according to any one of claims 2 to 6, wherein
at least one of the first shaping piece and the second shaping piece is configured to be able to float along the first direction.

8. The adhesive tape applying device according to claim 7, wherein
the shaping assembly comprises a shaping bracket, a first shaping mounting frame and a second shaping mounting frame, the first shaping piece is arranged on the first shaping mounting frame, the second shaping piece is arranged on the second shaping mounting frame,
a first elastic member is connected between the shaping bracket and the first shaping mounting frame, and the first elastic member can extend and retract along the first direction so that the first shaping piece floats along the first direction; and/or a second elastic member is connected between the shaping bracket and the second shaping mounting frame, and the second elastic member can extend and retract along the first direction so that the second shaping piece floats along the first direction.

9. The adhesive tape applying device according to claim 8, wherein
a first guide member is arranged on the shaping bracket, the first guide member extends along the first direction, and the first shaping mounting frame is slidably arranged on the first guide member; and/or
a second guide member is arranged on the shaping bracket, the second guide member extends along the first direction, and the second shaping mounting frame is slidably arranged on the second guide member.

10. The adhesive tape applying device according to claim 8 or 9, wherein
the shaping mechanism further comprises a shaping frame and a shaping driving member arranged on the shaping frame, the driving end of the shaping driving member is connected to the shaping bracket, and the shaping driving member can drive the shaping assembly to move close to or away from the workpiece along the second direction.

11. The adhesive tape applying device according to any one of claims 2 to 10, wherein
at least two groups of adhesive tape sucking heads are provided, two adjacent groups of adhesive tape sucking heads are arranged at intervals along a third direction, and the third direction is perpendicular to the first direction and perpendicular to the second direction.

12. The adhesive tape applying device according to claim 11, wherein
two adjacent groups of adhesive tape sucking heads are configured to be able to move close to or away from each other along the third direction.

13. The adhesive tape applying device according to claim 12, wherein the adhesive tape applying mechanism further comprises:
an adhesive tape sucking head driving member for driving at least one group of adhesive tape sucking heads to move along the third direction.

14. The adhesive tape applying device according to any one of claims 11 to 13, wherein
each group of adhesive tape sucking heads comprises two adhesive tape sucking blocks, and the two adhesive tape sucking blocks are arranged at an interval along the first direction and are configured to be able to move close to or away from each other along the first direction.

15. The adhesive tape applying device according to any one of claims 2 to 14, wherein the adhesive tape applying device further comprises:
an adhesive tape supply mechanism, comprising at least two adhesive tape supply units, each of the adhesive tape supply units being configured to be able to switch between an adhesive tape replacing station and an adhesive tape supply station, the adhesive tape sucking head sucking the adhesive tape cut from an adhesive tape roll carried by the adhesive tape supply unit at the adhesive tape supply station, and the adhesive tape replacing station being used for replacing the adhesive tape roll.

16. The adhesive tape applying device according to claim 15, wherein
when any one of at least two adhesive tape supply units is located at the adhesive tape supply station, the remaining adhesive tape supply units are located at respective adhesive tape replacing stations.

17. The adhesive tape applying device according to claim 16, wherein
the adhesive tape supply mechanism further comprises a sliding rail and at least two adhesive tape supply driving members, each of the adhesive tape supply units can be slidably arranged on the sliding rail, and each of the adhesive tape supply driving members is configured to respectively drive the adhesive tape supply unit to slide between the adhesive tape replacing station and the adhesive tape supply station.

18. The adhesive tape applying device according to any one of claims 15 to 17, wherein
each of the adhesive tape supply units comprises an adhesive tape supply bracket, an adhesive tape roll mounting shaft and an adhesive tape delivery mechanism, the adhesive tape roll mounting shaft is respectively arranged on both sides of the adhesive tape supply bracket in the third direction, and the adhesive tape delivery mechanism is respectively arranged on both sides of the adhesive tape supply bracket in the third direction.

19. The adhesive tape applying device according to claim 18, wherein
the adhesive tape delivery mechanism comprises an adhesive tape pulling mechanism, an adhesive tape pressing mechanism and an adhesive tape cutting mechanism, and the adhesive tape pressing mechanism, the adhesive tape cutting mechanism and the adhesive tape pulling mechanism are arranged in sequence along a delivery direction of the adhesive tape; and the adhesive tape pulling mechanism is used for pulling the adhesive tape to unwind, the adhesive tape pressing mechanism is used for pressing the adhesive tape in the second direction, and the adhesive tape cutting mechanism is used for cutting the adhesive tape.

20. The adhesive tape applying device according to any one of claims 2 to 19, wherein
the adhesive tape applying mechanism further comprises a movable frame, and the movable frame is connected to the adhesive tape sucking head and is used for driving the adhesive tape sucking head to move along the first direction and the second direction respectively.

21. An adhesive tape applying method for applying an adhesive tape to a workpiece, the adhesive tape applying method comprising:
an adhesive tape sucking step: sucking, by an adhesive tape sucking head, the adhesive tape;
an adhesive tape shaping step: enabling the adhesive tape sucking head to pass through a shaping channel formed by an interval space between a first shaping piece and a second shaping piece, and enabling two end portions of the sucked adhesive tape to be respectively in contact with the first shaping piece and the second shaping piece, so that the two end portions of the adhesive tape are bent; and
an adhesive tape applying step: applying, by the adhesive tape sucking head, the adhesive tape passing through the shaping channel to the workpiece,
wherein in the adhesive tape shaping step, one end portion of the two end portions of the adhesive tape is in contact with the first shaping piece and passes through a gap between the adhesive tape sucking head located in the shaping channel and the first shaping piece, and the other end portion of the two end portions of the adhesive tape is in contact with the second shaping piece and passes through a gap between the adhesive tape sucking head located in the shaping channel and the second shaping piece.

22. The adhesive tape applying method according to claim 21, wherein after the adhesive tape shaping step and before the adhesive tape applying step, the adhesive tape applying method further comprises:
an adhesive tape bending keeping step: respectively sucking the two end portions of the bent adhesive tape through a first side wall suction hole of a first side wall and a second side wall suction hole of a second side wall of the adhesive tape sucking head.

23. The adhesive tape applying method according to claim 21 or 22, wherein the adhesive tape applying method further comprises: an adhesive tape supply step, and the adhesive tape supply step comprises:
switching an adhesive tape supply unit with an adhesive tape roll to be replaced at an adhesive tape supply station from the adhesive tape supply station to an adhesive tape replacing station;
switching the adhesive tape supply unit with the replaced adhesive tape roll at the adhesive tape replacing station from the adhesive tape replacing station to the adhesive tape supply station; and
supplying, by the adhesive tape supply unit at the adhesive tape supply station, the adhesive tape to the adhesive tape sucking head.

24. The adhesive tape applying method according to claim 23, wherein the supplying, by the adhesive tape supply unit at the adhesive tape supply station, the adhesive tape to the adhesive tape sucking head comprises:
pulling, by an adhesive tape pulling mechanism of the adhesive tape supply unit at the adhesive tape supply station, the adhesive tape to unwind;
pressing, by an adhesive tape pressing mechanism of the adhesive tape supply unit at the adhesive tape supply station, the adhesive tape; and
cutting, by an adhesive tape cutting mechanism of the adhesive tape supply unit at the adhesive tape supply station, the adhesive tape.

25. A battery production line, comprising:
a supply device for supplying a workpiece; and
the adhesive tape applying device according to any one of claims 1 to 20.

26. The battery production line according to claim 25, wherein
the workpiece comprises at least two electrode assemblies, tabs of two adjacent electrode assemblies are connected to each other, and the tabs are located in a concave space between the two adjacent electrode assemblies; and
the adhesive tape sucking head is configured as follows: the adhesive tape passing through the shaping channel is applied to the tab and covers the tab.
